# EUROPÄISCHE PATENTSCHRIFT

(11) **EP 0 950 169 B1**
(45) Veröffentlichungstag und Bekanntmachung des Hinweises auf die Patenterteilung: **02.05.2001**
(21) Anmeldenummer: 97954474.9
(22) Anmeldetag: 24.12.1997
(51) Int. Cl.: G01F 11/28

(54) **VORRICHTUNG ZUR CHARGENWEISEN VOLUMETRISCHEN DOSIERUNG**
VOLUMETRIC BATCH DOSING DEVICE
DISPOSITIF DE DOSAGE VOLUMETRIQUE DISCONTINU

(30) Priorität: 03.01.1997 DE 19700093
(43) Veröffentlichungstag der Anmeldung: 20.10.1999
(73) Patentinhaber: Ziegler, Axel, 40625 Dusseldorf (DE)
(72) Erfinder: ZIEGLER, Axel, D-40625 Düsseldorf (DE); GRÜNDER, Andreas, D-41366 Schwalmtal (DE)
(74) Vertreter: COHAUSZ HANNIG DAWIDOWICZ & PARTNER
(86) Internationale Anmeldenummer: EP9707305
(87) Internationale Veröffentlichungsnummer: WO9829713

(56) Entgegenhaltungen:
- DE-C- 19 730
- DE-C- 109 476
- DE-C- 139 943
- GB-A- 575 576
- GB-A- 1 908 137
- GB-A- 1 910 049

## Beschreibung

Gegenstand der vorliegenden Erfindung ist eine Vorrichtung zur chargenweisen volumetrischen Dosierung von leichtem rieselfähigen Material, insbesondere von geblähtem Perlite, bestehend aus einem Meßbehälter mit einem oberen Materialauslauf zum Mischer, wobei der Meßbehälter aus zwei teleskopartig ineinander geschobenen, gegeneinander verfahrbaren Teilen besteht, die reproduzierbar höhenverstellbar ausgestaltet sind, unterhalb oder oberhalb der maximalen Füllhöhe eine obere Verschlußvorrichtung vorhanden ist und der untere Teil des Meßbehälters flexibel mit dem Mischer verbunden ist.

Eine solche Vorrichtung ist aus der GB 13718 und der GB 575576 bekannt. Diese bekannten Vorrichtungen bedürfen eines erheblichen ständigen Bedienungsaufwandes und lassen größere Mengen Staub austreten. Ferner neigen sie zum Verstopfen und arbeiten sehr langsam.

Besonders vorteilhaft sind solche Vorrichtungen für geblähte Perlite einsetzbar. Geblähte Perlite werden in erheblichem Maße, aber in verschiedenen Mengenmischungen zugesetzt, die beispielsweise zu Baustoffen und Baumaterialien wie Gipskartonplatten, Gipsplatten etc. verarbeitet werden. Da geblähte Perlite im allgemeinen nur ein Schüttgewicht von 40 bis 80 g/l haben und vor allem dazu dienen, die Endprodukte leichter zu machen, werden sie im allgemeinen nicht nach Gewicht, sondern nach Volumen zudosiert. Diese Zudosierung erfolgt bisher mit Hilfe eines Meßbehälters, in den das Material aus dem Vorratssilo - beispielsweise über eine Förderschnecke - eingefüllt wird. Der Meßbehälter weist eine Meßsonde auf, welche bei Erreichen der gewünschten Füllhöhe die Materialzufuhr unterbricht. Diese Meßsonde ist höhenverstellbar, so daß die jeweils gewünschte Volumenmenge pro Charge eingestellt werden kann. Der Meßbehälter weist darüber hinaus einen Materialauslauf am unteren Ende auf, durch den das Material zum Mischer rieseln bzw. fießen kann.

Diese Art der chargenweisen volumetrischen Dosierung von geblähtem Perlite ist relativ ungenau und führt darüber hinaus zum Austritt von Staub, der nur durch eine aufwendige Absaugung entfernt werden kann.

Die Erfindung betrifft auch ein Verfahren gemäß Anspruch 5 zum chargeweisen, volumetrischen Dosieren von leichtem, rieselfähigem Material.

Die Erfindung hat sich die Aufgabe gestellt, die chargenweise volumetrische Dosierung von leichtem, rieselfähigen Material, insbesondere von geblähtem Perlite, zu vereinfachen, genauer zu gestalten und dabei den Austritt von Staub zu vermeiden. Hierbei sollen alle Arbeitsgänge der Vorrichtung selbsttätig steuerbar und von kurzer Zeitdauer sein.

Diese Aufgabe wird erfindungsgemäß gelöst durch die Merkmale der Ansprüchen 1 und 5.

Der Meßbehälter weist oberhalb der maximalen Füllhöhe eine Entlüftungseinrichtung auf. Diese Entlüftungseinrichtung ist wiederum mit einem Staubfilter ausgerüstet, so daß die beim Einfüllen des Materials in den Meßbehälter verdrängte Luft problemlos entweichen kann, ohne den dabei entstehenden Staub in die Fabrik oder in die Umwelt zu blasen.

Die erfindungsgemäße Vorrichtung weist ferner dicht oberhalb des Materialauslaufs eine zweite Meßsonde auf. Diese signalisiert den Zeitpunkt, zu dem das Material vollständig in den Mischer geflossen ist, so daß die untere Verschlußvorrichtung wieder verschlossen werden kann. Erst dann kann der nächste Zyklus des Auffüllens und Abmessens beginnen.

Da gelegentlich das Material nicht rasch oder nicht vollständig aus dem Meßbehälter in den Mischer fließt, weist der Meßbehälter vorzugsweise dicht oberhalb der unteren Verschlußvorrichtung eine oder mehrere Düsen auf, in die Luft eingeblasen werden kann. Dies lockert das Material so auf, daß es problemlos in den Mischer fließt. Auch diese Düsen können mit der Rechen- und Steuereinheit verbunden sein, so daß sie nur dann angeschaltet werden, wenn die untere Meßsonde ungewöhnlich lange anzeigt, daß noch Material im Meßbehälter ist.

Dadurch, daß der Meßbehälter aus zwei teleskopartig ineinander geschobenen, gegeneinander verfahrbaren Teilen besteht, die reproduzierbar höhenverstellbar ausgestaltet sind, läßt sich die gewünschte Menge in sehr einfacher Weise einstellen. Die Höhenverstellbarkeit ist beispielsweise möglich über Zahnschienen. Auch diese sind sehr robuste und störungsfrei arbeitende Konstruktionen. Sie lassen sich darüber hinaus in einfacher Weise reproduzierbar auf die gewünschte Füllhöhe einstellen. Die gewünschte Volumenmenge wird am einfachsten durch Eichkurven ermittelt und der Rechen- und Steuereinheit einprogrammiert.

Vorzugsweise weist der Meßbehälter im mittleren Bereich einen größeren Durchmesser auf als am oberen und unteren Ende. Dies gestaltet vor allem eine flachere und kompaktere Bauweise der Vorrichtung, so daß Mengen zwischen 500 und 5000 l, vorzugsweise zwischen 1000 und 3000 l in relativ kurzen Abständen sicher, zuverlässig und reproduzierbar in ihr abgemessen und dann dem Mischer zugeführt werden können.

Die obere Meßsonde, die die gewünschte Füllhöhe anzeigt, befindet sich vorzugsweise im engeren oder sich verengenden Teil des Meßbehälters, da dies eine genauere Anzeige gestattet. Für den Fall, daß eine sehr genaue Dosierung gefordert wird, kann die obere Meßsonde auch oberhalb der oberen Verschlußvorrichtung angebracht sein. Diese Verschlußvorrichtung muß dann als Schieber ausgebildet sein, der sich durch die Schicht des bereits eingefüllten Materials hindurchschieben läßt. Anstelle von Schiebern können ansonsten als Verschlußvorrichtungen insbesondere Klappen und Drehklappen verwendet werden, die erfahrungsgemäß lange, problemlos und störungsfrei arbeiten und sich leicht durch Meßsignale der Sonden steuern lassen.

Um die Höhenunterschiede des unteren Teils des Meßbehälters bei verschiedenen Volumenmengen zu kompensieren, wird dieser Teil des Meßbehälters flexibel mit dem Mischer verbunden. Geeignet sind entweder entsprechend große Manschetten oder flexible Gummischläuche. Prinzipiell wäre es zwar auch möglich, anstelle des unteren Teiles des Meßbehälters den oberen Teil des Meßbehälters auf- und abzubewegen und diesen oberen Teil flexibel mit dem Vorratssilo und der Förderschnecke zu verbinden. Dies würde aber zur Folge haben, daß nicht nur die obere Meßsonde, sondern auch die Entlüftungsleitung auf- und abbewegt werden müßte. In der Praxis wird daher der obere Teil fest montiert und der untere Teil höhenverstellbar ausgestaltet, so daß dieser flexibel mit dem Mischer zu verbinden ist.

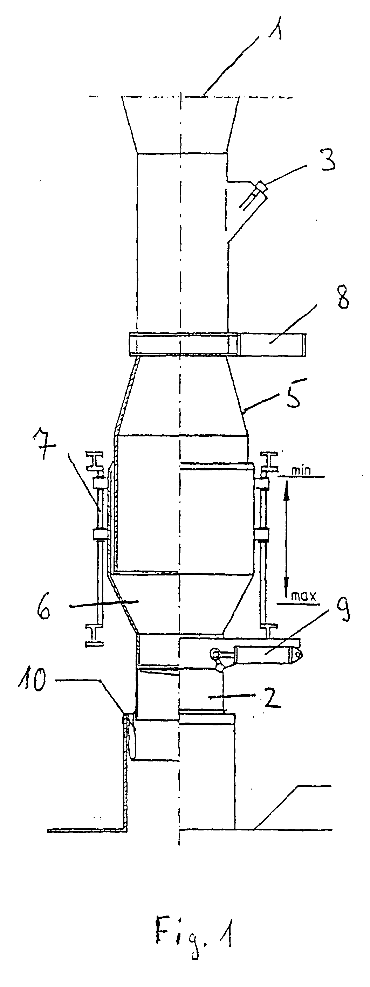

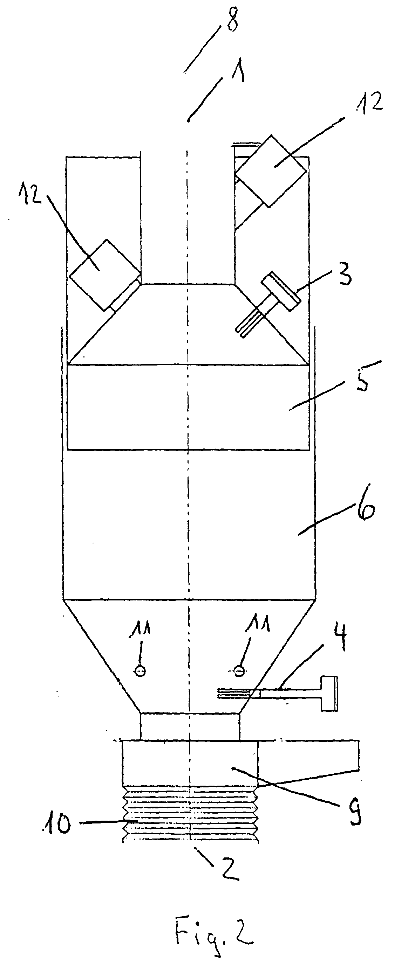

In den anliegenden Figuren sind zwei typische Ausführungsformen der erfindungsgemäßen Vorrichtung dargestellt. Figuren 1 und 2 zeigen Schnitte durch zwei unterschiedliche Ausgestaltungsformen der erfindungsgemäßen Vorrichtung.

In diesen Figuren bedeutet
- 1: der obere Materialzulauf
- 2: der untere Materialauslauf
- 3: eine Meßsonde zum Anzeigen der gewünschten Füllhöhe
- 4: eine Meßsonde zur Anzeige der Entleerung
- 5: der obere Teil des Meßbehälters
- 6: der untere Teil des Meßbehälters
- 7: eine Vorrichtung zur Höhenverstellung (beispielsweise mit Hilfe einer Zahnstange)
- 8: die obere Verschlußvorrichtung (in Fig. 2 nicht dargestellt)
- 9: die untere Verschlußvorrichtung (in Fig. 2 nur schematisch angedeutet)
- 10: eine flexible Verbindung mit dem Mischer
- 11: Düsen zum Einblasen von Luft
- 12: Entlüftungseinrichtungen (vorzugsweise mit Luftfiltern).

## Patentansprüche

1. Vorrichtung zur chargenweisen volumetrischen Dosierung von leichtem, rieselfähigen Material, insbesondere von geblähtem Perlite, bestehend aus einem Meßbehälter (5, 6) mit einem oberen Materialzulauf (1) vom Vorratssilo, und einem verschließbaren unteren Materialauslauf (2, 9) zum Mischer, wobei der Meßbehälter aus zwei teleskopartig ineinander geschobenen, gegeneinander verfahrbaren Teilen (5, 6) besteht, die reproduzierbar höhenverstellbar ausgestaltet sind, unterhalb oder oberhalb der maximalen Füllhöhe eine obere Verschlußvorrichtung (8) vorhanden ist und der untere Teil (6) des Meßbehälters flexibel mit dem Mischer verbunden ist, **dadurch gekennzeichnet**,
- daß eine Meßsonde (3) vorgesehen ist, die beim Erreichen der gewünschten Füllhöhe des Materials den unteren Materialzulauf verschließt,
- daß der Meßbehälter oberhalb der maximalen Füllhöhe eine Entlüftungseinrichtung aufweist,
- daß dicht oberhalb des Materialauslaufs eine zweite Meßsonde vorhanden ist,
- daß die Verschlußvorrichtungen durch die Sondensignale steuerbar sind,
- daß die Verschlußvorrichtungen und die Höheneinstellung mit einer Rechen- und Steuereinheit verbunden sind, und
- daß die Entlüftungseinrichtung mit einem Staubfilter ausgerüstet ist.

2. Vorrichtung gemäß Anspruch 1, **dadurch gekennzeichnet**, daß der Meßbehälter im mittleren Bereich einen größeren Durchmesser aufweist als am oberen und unteren Ende.

3. Vorrichtung nach Anspruch 1 oder 2, **dadurch gekennzeichnet**, daß oberhalb des Materialauslaufs eine oder mehrere Düsen für das Einblasen von Luft vorhanden sind.

4. Vorrichtung nach einem der Ansprüche 1 bis 3, **dadurch gekennzeichnet**, daß die Verschlußvorrichtungen als Drehklappen oder Schieber ausgebildet sind.

5. Verfahren zum chargenweisen, volumetrischen Dosieren von leichtem, rieselfähigem Material, insbesondere von geblähtem Perlite mit einer Vorrichtung mit einem Meßbehälter (5, 6) der einen oberen Materialzulauf (1) mit Verschlußvorrichtung (8) und einen unteren Materialauslauf (2) mit Verschlußvorrichtung (9) aufweist, **dadurch gekennzeichnet,**
- daß nach dem Entleeren des Meßbehälters (5, 6) die gegeneinander verfahrbaren Teile (5, 6) des Meßbehälters höhenverstellt werden, um das Volumen des Meßbehälters auf die gewünschte Füllmenge einzustellen,
- daß dann bei verschlossenem Materialauslauf (2) die obere Verschlußvorrichtung (8) geöffnet wird, wodurch das Material in den Meßbehälter fließt,
- daß nachdem das Material eine obere am Materialzulauf (1) angeordnete Meßsonde (3) erreicht hat, der Materialzulauf durch die obere Verschlußvorrichtung (8) verschlossen wird und
- daß dann die untere Verschlußvorrichtung (9) geöffnet wird, um die abgemessene Materialmenge zum Mischer fließen zu lassen.

## Claims

1. A device for the volumetric metering of batches of lightweight, pourable material, more particularly expanded pearlite, comprising a measuring container (5, 6) having an upper material inlet (1) from the storage silo and a lower closable material outlet (2, 9) into the mixer, the measuring container consisting of two telescopable parts (5, 6) which are vertically adjustable in a reproducible manner, an upper closure device (8) being provided above or below the maximum filling height, and the lower part (6) of the measuring container being flexibly connected to the mixer,
**characterised in that**
- a measuring probe (3) is provided, which closes the lower material inlet when the desired filling height of material is reached,
- the measuring container has a venting device above the maximum filling height,
- a second measuring probe is provided close above the material outlet,
- the closure devices can be controlled by the probe signals,
- the closure devices and the vertical adjustment are connected to a computing and control unit, and
- the venting device is equipped with a dust filter.

2. An apparatus according to claim 1,
**characterised in that** the measuring container has a larger diameter in the central zone than at the upper and lower ends.

3. An apparatus according to claims 1 or 2,
**characterised in that** one or more nozzles for the injection of air are provided above the material outlet.

4. An apparatus according to one of claims 1 to 3,
**characterised in that** the closure devices take the form of rotary or sliding valves.

5. A method for the volumetric metering of batches of lightweight, pourable material, more particularly expanded pearlite, using a device having a measuring container (5, 6) having an upper material inlet (1) with closure device (8) and a lower material outlet (2) with closure device (9),
characterised in that
- after the measuring container (5, 6) has been emptied, the telescopable parts (5, 6) of the measuring container are vertically adjusted, to adjust the volume of the measuring container to the required filling quantity,
- then, with the material outlet (2) closed, the upper closure device (8) is opened, so that the material flows into the measuring container,
- after the material has reached an upper measuring probe (3) disposed at the material inlet (1), the material inlet is closed by the upper closure device (8), and
- then the lower closure device (9) is opened, to enable the measured quantity of material to flow into the mixer.

## Revendications

1. Dispositif de dosage volumétrique discontinu d'une matière légère coulante, en particulier de perlite expansée, constitué d'un récipient de mesure (5, 6) avec une amenée de matière (1) supérieure depuis le silo de stockage et une décharge de matière (2, 9) inférieure verrouillable vers le mélangeur, le récipient de mesure étant constitué de deux pièces (5, 6) mobiles l'une par rapport à l'autre et coulissant télescopiquement l'une dans l'autre, lesquelles sont réalisées déplaçables en hauteur de manière reproductible, un dispositif de fermeture (8) supérieur étant disposé au-dessous ou au-dessus de la hauteur de remplissage maximale, la pièce (6) inférieure du récipient de mesure étant reliée de manière flexible au mélangeur,
caractérisé en ce
- qu'est prévue une sonde de mesure (3) qui, lors de l'arrivée à la hauteur de remplissage souhaitée de la matière, ferme l'amenée de matière supérieure,
- que le récipient de mesure présente un dispositif d'aération au-dessus de la hauteur de remplissage maximale,
- qu'une seconde sonde de mesure est disposée juste au-dessus de la décharge de matière,
- que les dispositifs de fermeture peuvent être commandés par les signaux de sondes,
- que les dispositifs de fermeture et le réglage en hauteur sont reliés à une unité de calcul et de commande et
- que le dispositif d'aération est équipé d'un filtre à poussière.

2. Dispositif selon la revendication 1,
caractérisé en ce que le récipient de mesure présente dans la zone médiane un diamètre plus grand qu'aux extrémités supérieure et inférieure.

3. Dispositif selon la revendication 1 ou 2,
caractérisé en ce qu'une ou plusieurs buses sont disposées au-dessus de la décharge de matière pour l'insufflation d'air.

4. Dispositif selon l'une des revendications 1 à 3,
caractérisé en ce que les dispositifs de fermeture sont réalisés sous forme de volets rotatifs ou de tiroirs.

5. Procédé de dosage volumétrique discontinu d'une matière légère coulante, en particulier de perlite expansée, au moyen d'un dispositif avec un récipient de mesure (5, 6) qui présente une amenée de matière (1) supérieure avec dispositif de fermeture (8) et une décharge de matière (2) inférieure avec dispositif de fermeture (9),
caractérisé en ce
- que, après le vidage du récipient de mesure (5, 6), les pièces (5, 6) du récipient de mesure mobiles l'une par rapport à l'autre sont déplacées en hauteur pour régler le volume du récipient de mesure à la quantité de remplissage souhaitée,
- qu'ensuite, lorsque la décharge de matière (2) est fermée, le dispositif de fermeture (8) supérieur est ouvert, grâce à quoi la matière s'écoule dans le récipient de mesure,
- qu'après que la matière a atteint une sonde de mesure (3) supérieure disposée à l'amenée de matière (1), l'amenée de matière est fermée par le dispositif de fermeture (8) supérieur et
- qu'ensuite, le dispositif de fermeture (9) inférieur est ouvert pour laisser s'écouler vers le mélangeur la quantité de matière mesurée.
